# EUROPEAN PATENT APPLICATION

(11) **EP 4 583 288 A1**
(43) Date of publication of application: **09.07.2025**
(21) Application number: 23915503.9
(22) Date of filing: 26.05.2023
(51) Int. Cl.: H01M 50/30

(54) **BATTERY CELL, BATTERY AND ELECTRIC DEVICE**

(30) Priority: 12.01.2023 CN 202320080937 U
(71) Applicant: Contemporary Amperex Technology (Hong Kong) Limited, Central (HK)
(72) Inventor: ZHOU, Wenlin, Ningde, Fujian 352100 (CN); ZHANG, Xiaoping, Ningde, Fujian 352100 (CN); YANG, Kaihuan, Ningde, Fujian 352100 (CN); WU, Ningsheng, Ningde, Fujian 352100 (CN); LI, Quankun, Ningde, Fujian 352100 (CN)
(74) Representative: Ran, Handong
(86) International application number: PCT/CN2023/096645
(87) International publication number: WO 2024/148739

(57) **Abstract**

The present application belongs to the technical field of batteries. Disclosed are a battery cell, a battery and an electric device. The battery cell comprises a casing, wherein the casing comprises a first wall, which comprises an inner surface and an outer surface arranged opposite each other, and a first through hole penetrating the inner surface and the outer surface; an electrode terminal at least partially penetrates the first through hole; a sealing member is used for sealing a gap between the electrode terminal and the first wall; a connector is disposed outside the battery cell and connected to the electrode terminal; a first insulating member is at least partially disposed between the connector and the first wall so as to separate the connector from the first wall; and a flow guide channel is formed between the first insulating member and the first wall, and the flow guide channel is in communication with the first through hole so as to, when the sealing member fails, cause the inside of the battery cell to be in communication with the outside. If the sealing member fails, the inside of the battery cell can be in communication with the outside by means of the flow guide channel, thereby improving the accuracy of a sealing performance test result of the battery cell.

## Description

### CROSS-REFERENCE TO RELATED APPLICATION

The present disclosure claims the priority to the Chinese patent application with the filling No. 202320080937.9 filed on January 12, 2023, and entitled "BATTERY CELL, BATTERY, AND ELECTRIC DEVICE", the contents of which are incorporated herein by reference in entirety.

### TECHNICAL FIELD

The present disclosure relates to the technical field of batteries, and particularly to a battery cell, a battery, and an electric device.

### BACKGROUND ART

With the development of new energy technologies, the application of batteries is becoming increasingly widespread. For example, they are used in electric bicycles, electric cars, electric airplanes, electric ships, and electric tools.

After the assembly of the battery cell is completed, it is generally necessary to detect the sealing performance of the battery cell. How to improve the accuracy of the detection results of the sealing performance of the battery cell is an urgent problem to be solved in battery technology.

### SUMMARY

In view of the above problem, the present disclosure provides a battery cell, a battery, and an electric device, which can improve the accuracy of the sealing performance detection of the battery cell.

In a first aspect, the present disclosure provides a battery cell. The battery cell includes a housing, wherein the housing includes a first wall, and the first wall includes an inner surface and an outer surface that are arranged oppositely, and a first through-hole penetrating the inner surface and the outer surface; an electrode terminal, at least partially threaded through the first through-hole; a sealing component, configured to seal a gap between the electrode terminal and the first wall; a connecting piece, arranged on an outside of the first wall and connected to the electrode terminal; a first insulating member, at least partially arranged between the connecting piece and the first wall to separate the connecting piece from the first wall; and a flow-guiding channel, formed between the first insulating member and the first wall, wherein the flow-guiding channel is in communication with the first through-hole, so that an interior of the battery cell is in communication with an exterior when the sealing component fails.

In the technical solution of the embodiment of the present disclosure, a flow-guiding channel is formed between the first insulating member and the first wall, wherein the flow-guiding channel is in communication with the first through-hole, so that an interior of the battery cell is in communication with an exterior when the sealing component fails. With this design, when detecting the sealing performance of the battery cell, if the sealing component fails, the interior of the battery cell can be conducted to the exterior through the flow-guiding channel, thereby improving the detection rate of sealing component failure, and further improving the accuracy of the sealing performance detection results of the battery cell.

In some embodiments, the flow-guiding channel is a flow-guiding groove arranged on a surface of the first insulating member. With this design, the flow-guiding channel is formed by providing the flow-guiding groove on the surface of the first insulating member, thereby reducing the difficulty of implementing the flow-guiding channel.

In some embodiments, the first insulating member includes a body portion and a first extending portion, wherein the body portion is located between the connecting piece and the first wall, the body portion is provided with a second through-hole for the electrode terminal to pass through, and the first extending portion is located on an outer periphery of the connecting piece and surrounds an edge of the body portion. With this design, the first extending portion increases the creepage height and improves the insulating effect of the first insulating member on the connecting piece and the first wall.

In some embodiments, the flow-guiding groove includes a first groove section and a second groove section, wherein the first groove section is arranged on an outer peripheral surface of the first extending portion, the second groove section is arranged on a surface of the body portion facing the first wall, and the first groove section and the second groove section are in communication. With this design, the forming difficulty of the first groove section and the second groove section is reduced.

In some embodiments, the outer surface is provided with a recess, and at least a portion of the first insulating member is arranged within the recess. With this design, the pre-positioning of the first insulating member through the recess during assembly with the first wall can be enabled, thus facilitating the assembly of the first insulating member.

In some embodiments, an end of the first groove section extends in a direction of the inner surface pointing toward the outer surface and extends beyond the outer surface. With this design, the risk of interruption of the flow-guiding channel due to the first groove section being located inside the recess is reduced.

In some embodiments, an end of the first groove section extends to an end of the first extending portion away from the body portion. With this design, the length of the first groove section is increased, thus improving the airflow smoothness of the first groove section.

In some embodiments, the first insulating member further includes a second extending portion, wherein the second extending portion protrudes from a surface of the body portion facing the first wall, the second extending portion is arranged around the second through-hole, and at least a portion of the second extending portion extends into the first through-hole. With this design, the insulating effect of the first insulating member on the electrode terminal and the first wall is improved.

In some embodiments, the flow-guiding groove further includes a third groove section, wherein the third groove section is arranged on an outer peripheral surface of the second extending portion and communicates with the first through-hole, and the second groove section communicates with the first groove section and the third groove section. With this design, it allows the second groove section to extend at least to the outer peripheral surface of the second extending portion, thus increasing the length of the second groove section and increasing the area of the communication region between the flow-guiding groove and the first through-hole, so as to improve the smoothness of the flow-guiding groove.

In some embodiments, the second extending portion is provided with a first end surface facing the sealing component, and an end of the third groove section extends to the first end surface. With this design, the length of the third groove section is increased, thus improving the airflow smoothness of the third groove section.

In some embodiments, at least a portion of the sealing component is positioned inside the first through-hole and provided with a second end surface facing the second extending portion, with the second end surface abutting the first end surface. When observed in the direction from the inner surface toward the outer surface, the second end surface does not overlap with the third groove section. With this design, it ensures that the groove opening of the third groove section extending to the first end surface does not contact the sealing component. Moreover, it reduces the risk of localized stress concentration in the sealing component, which occurs when the groove opening of the third groove section extending to the first end surface compresses the second end surface during the abutment between the second end surface and the first end surface. Therefore, the service life of the sealing component is improved.

In some embodiments, the electrode terminal includes a terminal body and a protruding portion, wherein the terminal body is arranged through the first through-hole, an end of the terminal body is connected to the connecting piece, another end of the terminal body is connected to the protruding portion, and the protruding portion protrudes from an outer peripheral surface of the terminal body.

In some embodiments, the sealing component includes a first portion and a second portion, wherein the first portion is located between an outer peripheral surface of the terminal body and a wall of the first through-hole, the second portion is located between the protruding portion and the first wall, and the second end surface is located at an end of the first portion away from the second portion. With this design, it allows the first portion to seal between the terminal body and the first wall, and the second portion to seal between the protruding portion and the first wall. Making the contour of the sealing component similar to that of the electrode terminal reduces the risk of failure of the sealing component, which results from excessive deformation of the sealing component.

In some embodiments, the sealing component is provided with a second end surface abutting the first insulating member. When observed in the direction from the inner surface toward the outer surface, the second end surface does not overlap with the flow-guiding groove. With this design, it ensures that the flow-guiding groove does not contact the sealing component. Moreover, it reduces the risk of localized stress concentration in the sealing component, which occurs when the flow-guiding groove compresses the second end surface of the sealing component during the abutment between the second end surface and the first insulating member. Therefore, the service life of the sealing component is improved.

In some embodiments, the battery cell includes a shell, which includes a bottom wall and a side wall surrounding the bottom wall. An end of the side wall is connected to the bottom wall, and another end forms an opening; and an end cover is configured to cover the opening, wherein the first wall is the end cover or the bottom wall. The first wall can be the bottom wall of the shell of the battery cell, or it can be the end cover of the battery cell. With this design, the first wall can be positioned at different locations of the battery cell, and different assembly methods can be selected according to the different positions of the electrode terminal, thus improving the adaptability of the first wall to different battery cells.

In a second aspect, the present disclosure provides a battery, including the battery cell mentioned in the above embodiments.

In the third aspect, the present disclosure provides an electric device, wherein the electric device includes the battery cell described in the above embodiments, and the battery cell is configured to provide electrical energy; or, the electric device includes the battery described in the above embodiments, and the battery is configured to provide electrical energy.

The above description is only an overview of the technical solution of the present disclosure. To provide a clearer understanding of the technical solutions of the present disclosure, it can be implemented according to the content of the summary. In order to make the other objectives, features, and advantages of the present disclosure more apparent and understandable, specific embodiments of the present disclosure are provided below.

### BRIEF DESCRIPTION OF DRAWINGS

Through reading the detailed description of the preferred embodiments below, various other advantages and benefits will become apparent to those skilled in the art. The drawings are provided solely for illustrating the preferred embodiments and are not to be considered as a limitation of the present disclosure. Moreover, in all the drawings, the same reference numerals are used to denote the same components. In the drawings,
FIG. 1 is a structural schematic diagram of a vehicle provided in some embodiments of the present disclosure;
FIG. 2 is an exploded view of a battery in some embodiments of the present disclosure;
FIG. 3 is a structural schematic diagram of a battery module provided in some embodiments of the present disclosure;
FIG. 4 is an exploded view of a battery cell in some embodiments of the present disclosure;
FIG. 5 is an exploded view of a battery cell in some embodiments of the present disclosure;
FIG. 6 is a section view of a battery cell in some embodiments of the present disclosure;
FIG. 7 is a locally enlarged view at A in FIG. 6 of the present disclosure;
FIG. 8 is an axonometric view of a first insulating member in some embodiments of the present disclosure;
FIG. 9 is an axonometric view of a first insulating member in some other embodiments of the present disclosure; and
FIG. 10 is a local section view of a battery cell in some embodiments of the present disclosure.

The drawings in the specific embodiments are labeled as follows:
10000- vehicle; 2000- controller; 3000- motor; 1000- battery; 101- first box body; 102-second box body; 100- battery module; 10- battery cell; 1- housing; 11a- shell; 11b- end cover; 111- first wall; 1111- outer surface; 1112- inner surface; 1113- first through-hole; 1114 - recess; 12- electrode terminal; 121- terminal body; 122- protruding portion; 13- sealing component; 131-first portion; 1311- second end surface; 132- second portion; 14- connecting piece; 15- first insulating member; 151- first extending portion; 1511- first groove section; 152- body portion; 1521- second groove section; 153- second extending portion; 1531- third groove section; 1532-first end surface; 154- flow-guiding groove; 155- second through- hole; 16- second insulating member; 17- flow-guiding channel; 2- electrode assembly; 3- connecting sheet.

### DETAILED DESCRIPTION OF EMBODIMENTS

The following will provide a detailed description of the embodiments of the technical solution of the present disclosure, in conjunction with the drawings. The following embodiments are provided solely for a clearer illustration of the technical solutions in the present disclosure. They are presented as examples and should not be used to limit the scope of protection of the present disclosure.

Unless otherwise defined, all technical and scientific terms used herein have the same meaning as understood by those skilled in the art of the technical field of the present disclosure. The terms used herein are used for the purpose of describing specific embodiments and are not intended to limit the present disclosure. The terms "comprise", "include", and any variations thereof as used in the description, claims, and the above-mentioned drawing descriptions of the present disclosure are intended to cover non-exclusive inclusions.

In the description of the embodiments of the present disclosure, the technical terms "first", "second", etc. are used solely for the purpose of distinguishing different objects and should not be construed as indicating or implying relative importance or suggesting a specific quantity, specific order, or hierarchical relationship of the indicated technical features. In the description of the embodiments of the present disclosure, "multiple" means at least two, such as two, three, etc., unless otherwise expressly and specifically limited.

The term "embodiment" used herein means that specific features, structures, or characteristics described in conjunction with the embodiment can be included in at least one embodiment of the present disclosure. The use of the phrase in various parts of the summary does not necessarily refer to the same embodiment, nor does it imply that these embodiments are mutually exclusive or independent of each other. Those skilled in the art understand explicitly and implicitly that the embodiments described herein can be combined with other embodiments.

In the embodiments of the present disclosure, the term "multiple" refers to two or more (including two). Similarly, "multiple groups" refers to two or more groups (including two groups), and "multiple pieces" refers to two or more pieces (including two pieces).

Additionally, in the description of the embodiments of the present disclosure, technical terms such as "center", "longitudinal", "lateral", "length", "width", "thickness", "up", "down", "front", "back", "left", "right", "vertical", "horizontal", "top", "bottom", "inner", "outer", "clockwise", "counterclockwise", "axial direction", "radial direction", "circumferential direction", indicating orientations or positional relationships, are based on the orientations or positional relationships shown in the drawings. These terms are used for facilitating the description of the embodiments of the present disclosure and simplifying the description, and should not be construed as indicating or implying that the devices or components referred to must have specific orientations or be constructed and operated in specific orientations. Therefore, they should not be understood as limiting the embodiments of the present disclosure.

In the description of the embodiments of the present disclosure, unless otherwise expressly specified and limited, technical terms such as "provide", "connect", "communicate", "fix", and similar terms should be broadly interpreted. For example, they can be fixed connections, detachable connections, or integral connections. They can also be mechanical connections or electrical connections. They can also be direct connections or indirect connections through intermediate media. Furthermore, they can be internal connections within two components or the interaction between two components. Those of ordinary skill in the art can understand the meanings of the above terms in the embodiments of the present disclosure according to specific situations.

The batteries mentioned in the art can be divided into disposable batteries and rechargeable batteries based on whether they are rechargeable. Currently, common types of rechargeable batteries include lead-acid batteries, nickel-metal hydride batteries, and lithium-ion batteries. Lithium-ion batteries are widely used in electric vehicles and hybrid vehicles. The lithium-ion batteries used for this purpose have a relatively lower capacity but provide a higher output and charging current, and a longer service life, though their cost is relatively high.

The battery described in the embodiments of the present disclosure refers to a rechargeable battery. In the following, lithium-ion batteries will primarily be used as an example to describe the embodiments disclosed in the present disclosure. It should be understood that the embodiments disclosed in the present disclosure are applicable to any other suitable types of rechargeable batteries. The batteries mentioned in the embodiments disclosed in the present disclosure can be directly or indirectly applied to suitable electric devices to supply power to the electric devices.

The batteries mentioned in the embodiments disclosed in the present disclosure refer to a single physical module that comprises one or multiple battery cells to provide a predetermined voltage and capacity. The battery cell is the basic unit of a battery, and it can generally be classified by its packaging method into cylindrical battery cells, prismatic battery cells, and soft pouch battery cells. The following description will primarily focus on prismatic battery cells. It should be understood that the embodiments described below are also applicable to cylindrical battery cells or soft pouch battery cells in certain aspects.

In some high-power application scenarios, such as electric vehicles, the application of batteries involves three levels: battery cells, battery modules, and batteries. A battery module is formed to protect battery cells from external impacts, heat, vibrations, etc., by electrically connecting a certain number of battery cells together and placing them in a frame. The battery refers to the final state of the battery system installed in an electric vehicle. Batteries typically include a box that is configured to encapsulate one or multiple battery cells. The box generally consists of a cover body and a box case.

In a common battery cell structure, the battery cell includes a housing, an electrode assembly, and an electrolyte. The electrode assembly is housed within the housing of the battery cell, and the electrode assembly includes a positive electrode sheet, a negative electrode sheet, and a separator.

The housing includes a shell and an end cover. The shell includes an accommodating cavity formed by multiple walls; and an opening. The end cover is arranged at the opening to seal the accommodating cavity.

In addition to the electrode assembly, the accommodating cavity also contains an electrolyte. To reduce the risk of fusing the electrode assembly through high currents, multiple positive tabs are provided and stacked together, and multiple negative tabs are provided and stacked together. The tabs generally extract the electrical energy of the electrode assembly by electrically connecting it with a conductive component. In some cases, the conductive component is a connecting sheet that connects the tab to the electrode terminal; and in other cases, the conductive component is the electrode terminal.

The electrode terminal generally includes a positive electrode terminal and a negative electrode terminal. For prismatic battery cells, the electrode terminals are typically arranged on the end cover. In some other cases, the electrode terminals can also be arranged in the shell. Multiple battery cells are connected in series and/or in parallel via the electrode terminals to be applied in various application scenarios.

To facilitate the extraction of electrical energy from inside the battery cell, mounting holes are typically provided on the end cover, and the electrode terminals connected to the electrode assembly pass through the mounting holes to extend to the outside of the housing. To prevent the electrolyte from leaking through the mounting holes to the outside of the battery cell and causing safety accidents, sealing components are generally arranged within the mounting holes, and thus, the electrode terminals and the end cover are sealed by the sealing components.

Taking a prismatic battery cell with electrode terminals arranged on the end cover as an example, the end cover and the shell are generally made of metallic conductive materials. To ensure that the electrode terminals can smoothly extract the electrical energy from inside the battery cell, insulation and isolation between the electrode terminals and the end cover is required during the production of the battery cell. The commonly used method is to add an insulating member between the electrode terminals and the end cover.

After the assembly of the battery cell is completed, it is generally necessary to detect the sealing performance of the battery cell. The commonly used detection method is the helium leak detection method (referred to as the helium detection method). The helium leak detection method is a sealing method that uses helium as a tracer gas. During helium leak detection, the battery cell is first placed into a vacuumed detection chamber, and after evacuating the inside of the battery cell, helium is injected. Then, a helium detector is used to measure the amount of helium that has leaked from the battery cell into the vacuumed detection chamber to determine the sealing performance of the battery cell.

During the sealing performance detection of the battery cell, some battery cells that are detected as having qualified sealing can still exhibit leakage after being used for a period of time. The accuracy of the detection result of the sealing performance of the battery cell is relatively low.

When the sealing component fails, the insulating member can provide a certain sealing effect, which makes it easy to make a false seal of the battery cell. When performing sealing performance detection on the battery cell, as the battery cell is not in the actual use of working conditions, the emergence of the above phenomenon of false seal allows the battery cell to meet the requirements of the sealing test; however, it cannot meet the needs of the actual use of working conditions.

In view of this, to improve the accuracy of the detection results of the sealing performance of the battery cell, the embodiments of the present disclosure design a battery cell, wherein the battery cell includes a housing, a sealing component, an electrode terminal, an insulating member, a connecting piece, and a flow-guiding channel. The housing includes a first wall, wherein the first wall is provided with a through hole, and at least a portion of the electrode terminal extends through the through hole mentioned above. The sealing component is configured to seal the electrode terminal and the first wall. The connecting piece is arranged on an outside of the first wall and connected to the electrode terminal. At least a portion of the first insulating member is arranged between the connecting piece and the first wall to separate the connecting piece from the first wall. The flow-guiding channel is formed between the first insulating member and the first wall and is in communication with the through hole mentioned above. When detecting the sealing performance of the battery cell, if the sealing component fails, the interior of the battery cell can be conducted to the exterior through the flow-guiding channel, and helium gas injected inside the battery cell can flow to the outside of the battery cell through the flow-guiding channel; thus, the amount of helium detected by the helium detector will be abnormal. This eliminates the interference of the false seal on the detection results, thereby improving the accuracy of the detection results of the sealing performance of the battery cell.

The technical solutions described in the embodiments of the present disclosure are applicable to battery cells, batteries, and electric devices that utilize the batteries.

The electric devices include but are not limited to: electric mobiles, electric vehicles, ships, spacecraft, electric tools, etc. For example, spacecraft includes airplanes, rockets, space shuttles, and space capsules. Electric tools include metal cutting electric tools, grinding electric tools, assembly electric tools, and railway electric tools, such as concrete vibrators and electric planers.

For ease of explanation, the following embodiment will be described using one embodiment of the present disclosure where the electric device is a vehicle 10000 as an example.

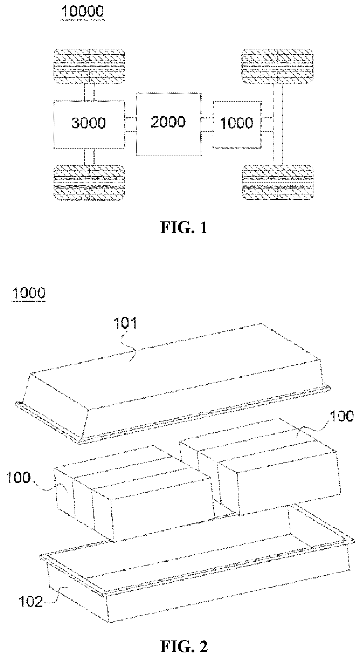

For instance, FIG. 1 is a structural schematic diagram of a vehicle 10000 provided in some embodiments of the present disclosure. The vehicle 10000 can be a gasoline-powered car, a natural gas car, or a new energy vehicle. The new energy vehicles can be pure electric cars, hybrid cars, extended-range cars, and so on. The vehicle 10000 can be provided therein with a motor 3000, a controller 2000, and a battery 1000. The controller 2000 is configured to control the battery 1000 to power the motor 3000. For example, the battery 1000 can be arranged at the bottom, front, or rear of the vehicle 10000. The battery 1000 is configured to provide power for the vehicle 10000. For instance, the battery 1000 can be the operational power source for the vehicle 10000, which is configured to provide power to the electrical systems of the vehicle 10000, for example, for the working power requirements for starting, navigating, and running the vehicle 10000. In another embodiment of the present disclosure, the battery 1000 can serve not only as the operational power source for the vehicle 10000 but also as the driving power source for the vehicle 10000. It can replace or partially replace gasoline or natural gas to provide driving propulsion for the vehicle 10000.

To meet different power usage requirements, the battery 1000 can include multiple battery cells 10, wherein the multiple battery cells 10 can be connected in series, in parallel, or in a hybrid connection, where the hybrid connection refers to a mix of series connection and parallel connection. The battery 1000 can also be referred to as a battery pack. Optionally, multiple battery cells 10 can first be connected in series, in parallel, or in a hybrid connection to form a battery module 100. Multiple battery modules 100 can then be connected in series, in parallel, or in a hybrid connection to form the battery 1000. That is to say, multiple battery cells 10 can directly form the battery 1000, or they can first form a battery module 100, with the battery modules 100 then forming the battery 1000.

For instance, referring to FIG. 2, FIG. 2 is an exploded view of a battery 1000 in some embodiments of the present disclosure. The battery 1000 can include multiple battery cells 10. The battery 1000 can further include a box, wherein the interior of the box is of a hollow structure. Multiple battery cells 10 are accommodated within the box, as shown in the drawing, which are referred to as the first box body 101 and the second box body 102, respectively, with the first box body 101 and the second box body 102 capped together. The shape of the first box body 101 and the second box body 102 can be based on the shape of the combinations of the multiple battery cells 10. The first box body 101 and the second box body 102 can both be provided with an opening. The first box body 101 and the second box body 102 can be of hollow rectangular prisms, wherein only one face of each is an opening face. The opening of the first box body 101 and the opening of the second box body 102 are provided opposite to each other, and the first box body 101 and the second box body 102 are snapped together to form a box with a closed chamber. The multiple battery cells 10 are connected in parallel, in series, or in hybrid connection with each other and then arranged inside the box formed by snapping the first box body 101 with the second box body 102.

Optionally, the battery 1000 can include other structures, which are not described herein. For example, the battery 1000 can also include a busbar component, and the busbar component is configured for achieving electrical connections between multiple battery cells 10, for example, parallel connections, series connections, or hybrid connections. Specifically, the busbar component can achieve the electrical connections between the battery cells 10 by connecting the electrode terminals 12 of the battery cells 10. Further, the busbar component can be fixed to the electrode terminals 12 of the battery cells 10 through welding. The electric energy of multiple battery cells 10 can be further drawn out through a conductive mechanism that passes through the box. Optionally, the conductive mechanism can also belong to the busbar component.

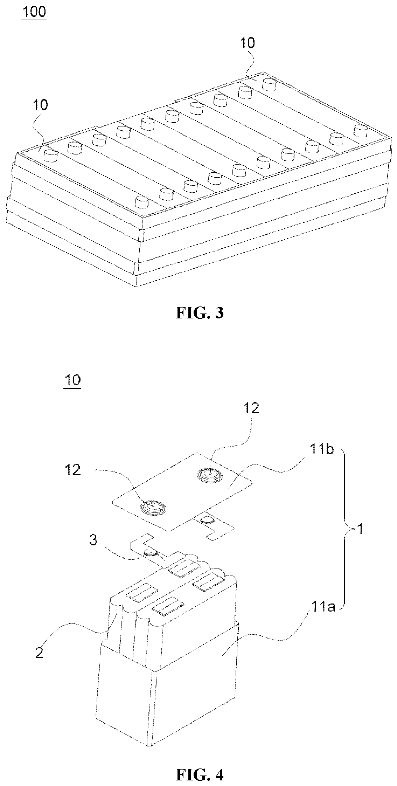

According to different power requirements, the number of battery cells 10 can be set to any value. Multiple battery cells 10 can be connected in series, in parallel, or in a hybrid connection to achieve greater capacity or power. Since each battery 1000 can include a large number of battery cells 10, to facilitate mounting, the battery cells 10 can be arranged in groups, with each group of battery cells 10 forming a battery module 100. The number of battery cells 10 included in the battery module 100 is not limited and can be set according to requirements. For example, FIG. 3 is a structural schematic diagram of a battery module 100 provided in some embodiments of the present disclosure. The battery 1000 can include multiple battery modules 100, wherein the battery modules 100 can be connected in series, in parallel, or in a hybrid connection.

Referring to FIG. 4, FIG. 4 is an exploded view of a battery cell 10 in some embodiments of the present disclosure. The battery cell 10 includes one or multiple electrode assemblies 2, and a housing 1. The housing 1 can include a shell 11a, with multiple wall portions of the shell 11a, i.e., multiple wall portions of the housing 1, forming a cavity. The cavity can be configured to accommodate the electrode assembly 2. The shape of the shell 11a is determined based on the shape of one or more electrode assemblies 2 when combined. For example, the shell 11a can be of a hollow rectangular cuboid, cube, or regular polyhedron, and one of the surfaces of the shell 11a is provided with an opening so that one or more electrode assemblies 2 can be placed inside the shell 11a. The shell 11a is filled with an electrolyte, such as an electrolytic solution.

In some embodiments, the first wall 111 can be the bottom wall of the shell 11a of the housing 1, or it can be the end cover 11b of the housing 1. It is to be understood that, depending on the structure of the housing 1, the first wall 111 can be any wall portion of the housing 1 of the battery cell 10. The electrode terminal 12 of the battery cell 10 is configured for electrical connection with the electrode assembly 2, to draw out the electric energy of the battery cell 10.

The battery cell 10 can also include two electrode terminals 12, and the two electrode terminals 12 can be arranged on the end cover 11b. The end cover 11b is generally in a flat plate shape, with two electrode terminals 12 fixed on the flat plate surface of the end cover 11b. The two electrode terminals 12 are positive electrode terminal 12 and negative electrode terminal 12. Each electrode terminal 12 is correspondingly provided with a connecting sheet 3, which is positioned between the end cover 11b and the electrode assembly 2, and is configured to achieve an electrical connection between the electrode assembly 2 and the electrode terminal 12.

In the battery cell 10, based on actual usage requirements, one or multiple electrode assemblies 2 can be provided. As shown in FIG. 4, multiple independent electrode assemblies 2 are arranged inside the battery cell 10.

According to some embodiments of the present disclosure, with reference to FIG. 4 to FIG. 9, The present disclosure provides a battery cell 10. The battery cell 10 includes a housing 1, wherein the housing 1 includes a first wall 111, and the first wall 111 includes an inner surface 1112 and an outer surface 1111 that are arranged oppositely, and a first through-hole 1113 penetrating the inner surface 1112 and the outer surface 1111; an electrode terminal 12, at least partially threaded through the first through-hole 1113; a sealing component, configured to seal the electrode terminal 12 and the first wall 111; a connecting piece 14, arranged outside the battery cell 10 and connected to the electrode terminal 12; a first insulating member 15, at least partially arranged between the connecting piece 14 and the first wall 111 to separate the connecting piece 14 from the first wall 111; and a flow-guiding channel 17, formed between the first insulating member 15 and the first wall 111, wherein the flow-guiding channel 17 is in communication with the first through-hole 1113, so that an interior of the battery cell 10 is in communication with an exterior when the sealing component 13 fails.

The first wall 111 can be any wall portion configured for forming the housing 1 that accommodates the electrode assembly 2. The material of the housing 1 can be diverse, such as copper, iron, aluminum, steel, and aluminum alloy.

The axis of the first through-hole 1113 can be parallel to the thickness direction of the first wall 111 or form a certain angle with the thickness direction of the first wall 111.

The outer surface 1111 of the first wall 111 refers to the surface of the first wall 111 away from the electrode assembly 2, and the inner surface 1112 of the first wall 111 refers to the surface of the first wall 111 facing toward the electrode assembly 2. The outer surface 1111 and the inner surface 1112 of the first wall 111 are arranged opposite each other along the thickness direction of the first wall 111.

At least a portion of the electrode terminal 12 is arranged through the first through-hole 1113. The electrode terminal 12 is provided on the first wall 111. The electrode terminal 12 is electrically connected to the tab of the electrode assembly 2 and is configured to output the electric energy of the battery cell 10. The electrode terminal 12 and the tab of the electrode assembly 2 can be directly connected or indirectly connected. Exemplarily, the electrode terminal 12 can be electrically connected to the tab through a conductive component.

In the battery cell 10, one or multiple electrode terminals 12 can be provided. Taking the case where the battery cell 10 includes two electrode terminals 12 as an example, the two electrode terminals 12 can have the same polarity or opposite polarities. If the two electrode terminals 12 have the same polarity, the two electrode terminals 12 can be connected to a positive tab or a negative tab through a conductive component. If the two electrode terminals 12 have opposite polarities, one electrode terminal 12 can be connected to a positive tab through a conductive component, and the other electrode terminal 12 can be connected to a negative tab through another conductive component.

The sealing component 13 is configured to seal the electrode terminal 12 and the first wall 111 to reduce the risk of internal electrolyte leakage through the first through-hole 1113 in the battery cell 10. In some embodiments, the sealing component 13 can be an annular sealing ring sleeved on the outside of the electrode terminal 12.

After connecting the connecting piece 14 to the electrode terminal 12, it facilitates the electrical connection of the battery cell 10 with external components. The connecting piece 14 can be a riveting block that achieves riveting between the electrode terminal 12 and the first wall 111. The connecting piece 14 can be made of metal materials such as copper, iron, aluminum, steel, and aluminum alloy. In embodiments where multiple battery cells 10 are connected in series, in parallel, or in hybrid connections through a busbar component, the busbar component can be connected to the connecting piecer 14 through welding.

In embodiments where the battery cell 10 includes two electrode terminals 12, one or two connecting pieces 14 can be provided in the battery cell 10. If two connecting pieces are provided 14 in the battery cell 10, each electrode terminal 12 corresponds to one connecting piece 14. If one connecting piece 14 is provided in the battery cell 10, the two electrode terminals 12 are then connected to the same connecting piece 14, meaning that the two electrode terminals 12 share one connecting piece 14 in common. It should be noted that when the two electrode terminals 12 in the battery cell 10 have the same polarity, the two electrode terminals 12 can share one connecting piece 14. When the two electrode terminals 12 in the battery cell 10 have opposite polarities, the two electrode terminals 12 can be respectively connected to two connecting pieces 14, with an insulating member arranged between the two connecting pieces 14 for insulation.

The first insulating member 15 is a component arranged on the outer side of the first wall 111 to insulate and separate the connecting piece 14 from the first wall 111. The outer side of the first wall 111 is the side of the first wall 111 that faces away from the electrode assembly 2. The material of the first insulating member 15 is an insulating material, and the material of the first insulating member 15 can be selected from insulating and electrolyte-resistant materials such as polypropylene, polycarbonate, polytetrafluoroethylene, polyvinyl chloride, polyethylene, and polyester resin.

In some embodiments, the first insulating member 15 can abut the outer surface 1111 of the first wall 111 of the housing 1 and be fixed by a fastener to restrict the rotation of the first insulating member 15; and in other embodiments, a recess 1114 can be processed on the outer surface 1111 of the first wall 111, the first insulating member 15 can be mounted within the recess 1114 mentioned above, and the first insulating member 15 fits against the inner wall of the recess 1114 to restrict the rotation of the first insulating member 15.

The flow-guiding channel 17 is formed between the first insulating member 15 and the first wall 111, and the flow-guiding channel 17 communicates with the first through-hole 1113. The flow-guiding channel 17 can be a flow-guiding groove 154 arranged between the first insulating member 15 and the first wall 111; it can also be a channel formed by a gap between the first insulating member 15 and the first wall 111; or, it can be an irregular channel formed by the surface of the first insulating member 15 in contact with the first wall 111 being a rough surface.

In some embodiments, the battery cell 10 can further include a second insulating member 16, and the second insulating member 16 is positioned between the shell 11a and the end cover 11b and is configured to insulate and separate the end cover 11b from the shell 11a.

It should be noted that, in the embodiments of the present disclosure, situations where the sealing component 13 is not properly mounted, the sealing component 13 is missing in the battery cell 10, or the sealing component 13 has defects, all belong to the circumstances of sealing component 13 failure.

In the technical solution of the embodiment of the present disclosure, a flow-guiding channel 17 is formed between the first insulating member 15 and the first wall 111, wherein the flow-guiding channel 17 is in communication with the first through-hole 1113, so that an interior of the battery cell 10 is in communication with an exterior when the sealing component 13 fails. With this design, when detecting the sealing performance of the battery cell 10, if the sealing component 13 fails, the interior of the battery cell 10 can be conducted to the exterior through the flow-guiding channel 17, thereby improving the detection rate of sealing component 13 failure, and further improving the accuracy of the sealing performance detection results of the battery cell 10.

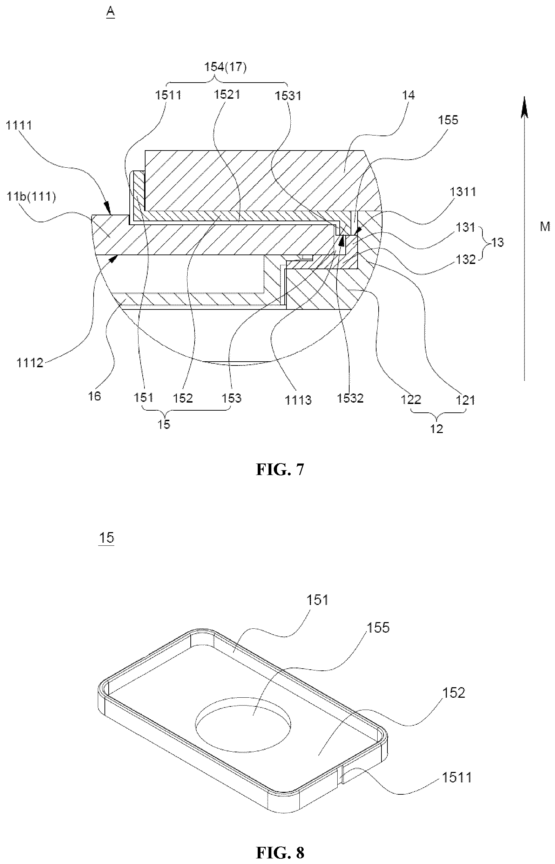

According to some embodiments of the present disclosure, with reference to FIG. 7, the flow-guiding channel 17 is a flow-guiding groove 154 arranged on a surface of the first insulating member 15.

The flow-guiding groove 154 can include one groove section or consist of multiple groove sections that are directly communicated or indirectly communicated in sequence.

It should be noted that at least a portion of the surface of the first insulating member 15 needs to be positioned between the first insulating member 15 and the first wall 111.

With this design, the flow-guiding channel 17 is formed by providing the flow-guiding groove 154 on the surface of the first insulating member 15, thereby reducing the difficulty of implementing the flow-guiding channel 17.

According to some embodiments of the present disclosure, with reference to FIG. 7, the first insulating member 15 includes a body portion 152 and a first extending portion 151, wherein the body portion 152 is located between the connecting piece 14 and the first wall 111, the body portion 152 is provided with a second through-hole 155 for the electrode terminal 12 to pass through, and the first extending portion 151 is located on an outer periphery of the connecting piece 14 and surrounds an edge of the body portion 152.

The thickness of the first extending portion 151 can be the same as the thickness of the body portion 152, and the thickness of the first extending portion 151 can also be greater than or less than the thickness of the body portion 152.

In some embodiments, referring to FIG. 7, the sectional shape of the first extending portion 151 and the body portion 152 is L-shaped.

With this design, the first extending portion 151 increases the creepage height and improves the insulating effect of the first insulating member 15 on the connecting piece 14 and the first wall 111.

According to some embodiments of the present disclosure, with reference FIG. 7, FIG. 9, and FIG. 10, the flow-guiding groove 154 includes a first groove section 1511 and a second groove section 1521, wherein the first groove section 1511 is arranged on an outer peripheral surface of the first extending portion 151, the second groove section 1521 is arranged on a surface of the body portion 152 facing the first wall 111, and the first groove section 1511 and the second groove section 1521 are in communication.

The section of the first groove section 1511 can be rectangular, arcuate, V-shaped, or other shapes, and the section of the second groove section 1521 can also be rectangular, arcuate, V-shaped, or other shapes; the section of the first groove section 1511 can be the same as or different from the section of the second groove section 1521.

The first groove section 1511 can be a linear groove or a zigzag groove. If the first groove section 1511 is a linear groove, the first groove section 1511 can extend along the thickness direction of the body portion 152 or be arranged at a non-zero angle relative to the thickness direction of the body portion 152.

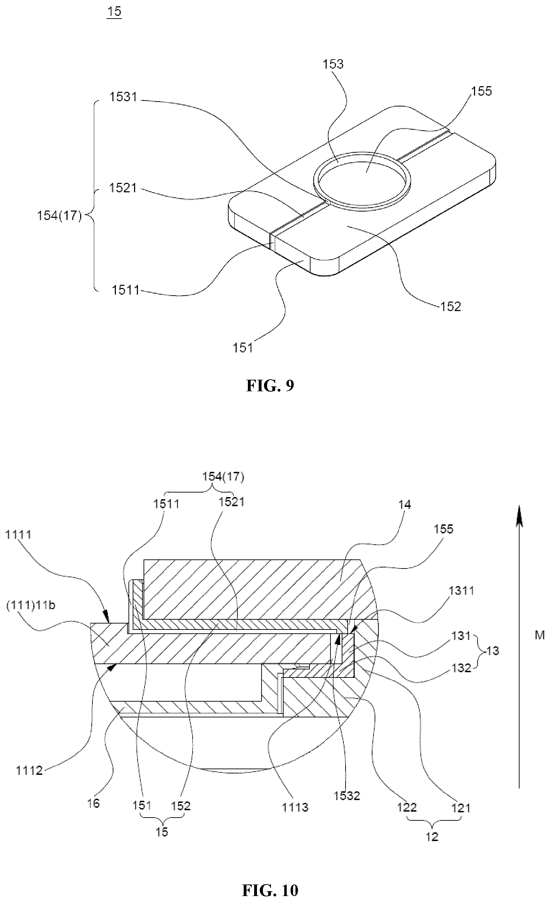

The second groove section 1521 can be a linear groove or a zigzag groove. If the second groove section 1521 is a linear groove, as shown in FIG. 9, the second groove section 1521 can extend along the length direction of the body portion 152 or be arranged at a non-zero angle relative to the length direction of the body portion 152.

With this design, the forming difficulty of the first groove section 1511 and the second groove section 1521 is reduced.

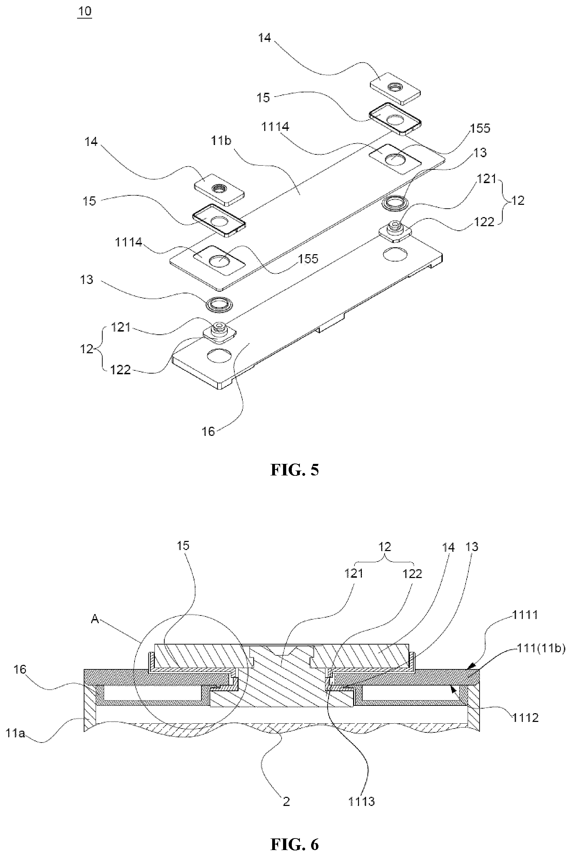

According to some embodiments of the present disclosure, with reference to FIG. 5, the outer surface 1111 is provided with a recess 1114, and at least a portion of the first insulating member 15 is arranged within the recess 1114.

The profile of the recess 1114 can be quadrilateral, pentagonal, hexagonal, etc., and the profile of the recess 1114 can include one or more arcuate segments and at least one straight segment.

As shown in FIG. 5, in the embodiment where the profile of the recess 1114 is rectangular and the profile of the first insulating member 15 is also rectangular, when the first insulating member 15 is located within the recess 1114, the recess 1114 can restrict the rotation of the first insulating member 15.

With this design, the pre-positioning of the first insulating member 15 through the recess 1114 during assembly with the first wall 111 can be enabled, thus facilitating the assembly of the first insulating member 15.

According to some embodiments of the present disclosure, an end of the first groove section 1511 extends in a direction of the inner surface 1112 pointing toward the outer surface 1111 and extends beyond the outer surface 1111.

As shown in FIG. 7, the direction indicated by M in FIG. 7 is the direction from the inner surface 1112 to the outer surface 1111.

An end of the first groove section 1511 extends beyond the outer surface 1111, which means that at least a portion of the first groove section 1511 is located outside the first wall 111.

With this design, the risk of interruption of the flow-guiding channel 17 due to the first groove section 1511 being located inside the recess 1114 is reduced.

According to some embodiments of the present disclosure, with reference to FIG. 7, an end of the first groove 1511 section extends to an end of the first extending portion 151 away from the body portion 152.

An end of the first groove 1511 section extends to an end of the first extending portion 151 away from the body portion 152, which means that the first groove section 1511 passes through the first extending portion 151 in the direction M.

With this design, the length of the first groove section 1511 is increased, thus improving the airflow smoothness of the first groove section 1511.

According to some embodiments of the present disclosure, with reference FIG. 7, FIG. 9, and FIG. 10, the first insulating member 15 further includes a second extending portion 153, wherein the second extending portion 153 protrudes from a surface of the body portion 152 facing the first wall 111, the second extending portion 153 is arranged around the second through-hole 155, and at least a portion of the second extending portion 153 extends into the first through-hole 1113.

In some embodiments, as shown in FIG. 7, the sections of the first extending portion 151, the body portion 152, and the second extending portion 153 are Z-shaped.

The thickness of the second extending portion 153 can be the same as the thickness of the body portion 152, and the thickness of the second extending portion 153 can also be greater than or less than the thickness of the body portion 152.

With this design, the insulating effect of the first insulating member 15 on the electrode terminal 12 and the first wall 111 is improved.

According to some embodiments of the present disclosure, with reference FIG. 7, FIG. 9, and FIG. 10, the flow-guiding groove 154 further includes a third groove section 1531, wherein the third groove section 1531 is arranged on an outer peripheral surface of the second extending portion 153 and communicates with the first through-hole 1113, and the second groove section 1521 communicates with the first groove section 1511 and the third groove section 1531.

The section of the third groove section 1531 can be rectangular, arcuate, V-shaped, or other shapes. The section of the third groove section 1531 can be the same as or different from the section of the second groove section 1521, and the section of the third groove section 1531 can be the same as or different from the section of the first groove section 1511.

The third groove section 1531 can be a linear groove or a zigzag groove. If the third groove section 1531 is a linear groove, the third groove section 1531 can extend along the thickness direction of the body portion 152 or be arranged at a non-zero angle relative to the thickness direction of the body portion 152.

With this design, it allows the second groove section 1521 to extend at least to the outer peripheral surface of the second extending portion 153, thus increasing the length of the second groove section 1521 and increasing the area of the communication region between the flow-guiding groove 154 and the first through-hole 1113, so as to improve the smoothness of the flow-guiding groove 154.

According to some embodiments of the present disclosure, with reference FIG. 7, FIG. 9, and FIG. 10, the second extending portion 153 is provided with a first end surface 1532 facing the sealing component 13, and an end of the third groove section 1531 extends to the first end surface 1532.

An end of the third groove section 1531 extends to the first end surface 1532, which means that in a direction opposite to M direction, the first groove section 1511 passes through the second extending portion 153.

With this design, the length of the third groove section 1531 is increased, thus improving the airflow smoothness of the third groove section 1531.

According to some embodiments of the present disclosure, with reference FIG. 7, FIG. 9, and FIG. 10, at least a portion of the sealing component 13 is positioned inside the first through-hole 1113 and provided with a second end surface 1311 facing the second extending portion 153, with the second end surface 1311 abutting the first end surface 1532. When observed in the direction from the inner surface 1112 toward the outer surface 1111, the second end surface 1311 does not overlap with the third groove section 1531.

In some embodiments, referring to FIG. 7, The abutment of the second end surface 1311 and the first end surface 1532 is only a portion of the second end surface 1311 against a portion of the first end surface 1532.

Referring to FIG. 7, when observed in the direction from the inner surface 1112 toward the outer surface 1111, the second end surface 1311 does not overlap with the third groove section 1531, meaning that the groove opening of the third groove section 1531 extending to the first end surface 1532 does not contact the second end surface 1311. The contact of the groove opening of the third groove section 1531 with the second end surface 1311 can cause stress concentration in the portion of the second end surface 1311 contacting the groove opening; however, since the groove opening of the third groove section 1531 does not contact the sealing component 13, the risk of localized stress concentration in the sealing component 13 is reduced.

With this design, it ensures that the groove opening of the third groove section 1531 extending to the first end surface 1532 does not contact the sealing component 13. Moreover, it reduces the risk of localized stress concentration in the sealing component 13, which occurs when the groove opening of the third groove section 1531 extending to the first end surface 1532 compresses the second end surface 1311 during abutment between the second end surface 1311 and the first end surface 1532. Therefore, the service life of the sealing component 13 is improved.

According to some embodiments of the present disclosure, referring to FIG. 6 and FIG. 7, the electrode terminal 12 includes a terminal body 121 and a protruding portion 122, wherein the terminal body 121 is arranged through the first through-hole 1113, an end of the terminal body 121 is connected to the connecting piece 14, another end of the terminal body 121 is connected to the protruding portion 122, and the protruding portion 122 protrudes from an outer peripheral surface of the terminal body 121.

According to some embodiments of the present disclosure, referring to FIG. 6 and FIG. 7, the sealing component 13 includes a first portion 131 and a second portion 132, wherein the first portion 131 is located between an outer peripheral surface of the terminal body 121 and a wall of the first through-hole 1113, the second portion 132 is located between the protruding portion 122 and the first wall 111, and the second end surface 1311 is located at an end of the first portion 131 away from the second portion 132.

The projection of the first portion 131 in the M direction can be annular, where the inner ring of the annulus can be circular or polygonal, and the outer ring of the annulus can also be circular or polygonal.

With this design, it allows the first portion 131 to seal between the terminal body 121 and the first wall 111, and the second portion 132 to seal between the protruding portion 122 and the first wall 111. To make the contour of the sealing component 13 similar to that of the electrode terminal 12 reduces the risk of failure of the sealing component 13, which results from excessive deformation of the sealing component 13.

According to some embodiments of the present disclosure, with reference to FIG. 10, the sealing component 13 is provided with a second end surface 1311 abutting the first insulating member 15. When observed in the direction from the inner surface 1112 toward the outer surface 1111, the second end surface 1311 does not overlap with the flow-guiding groove 154.

The direction indicated by M in FIG. 10 is the direction from the inner surface 1112 to the outer surface 1111.

In some embodiments, referring to FIG. 10, the first insulating member 15 includes a body portion 152 and a first extending portion 151, wherein the body portion 152 is located between the connecting piece 14 and the first wall 111, the body portion 152 is provided with a second through-hole 155 for the electrode terminal 12 to pass through, and the first extending portion 151 is located on an outer periphery of the connecting piece 14 and surrounds an edge of the body portion 152. The flow-guiding groove 154 includes a first groove section 1511 and a second groove section 1521, wherein the first groove section 1511 is arranged on an outer peripheral surface of the first extending portion 151, the second groove section 1521 is arranged on a surface of the body portion 152 facing the recess 1114, and the first groove section 1511 and the second groove section 1521 are in communication. The sealing component 13 is provided with a second end surface 1311 that abuts the first insulating member 15, which means that a portion of the body portion 152 of the first insulating member 15 abuts a portion of the second end surface 1311. The second end surface 1311 does not overlap with the flow-guiding groove 154, meaning that no gap is provided in the contact region between the body portion 152 of the first insulating member 15 and the second end surface 1311, and the first groove section 1521 of the flow-guiding groove 154 will not contact the second end surface 1311.

With this design, it ensures that the flow-guiding groove 154 does not contact the sealing component 13. Moreover, it reduces the risk of localized stress concentration in the sealing component 13, which occurs when the flow-guiding groove 154 compresses the second end surface 1311 of the sealing component 13 during the abutment between the second end surface 1311 and the first insulating member 15. Therefore, the service life of the sealing component 13 is improved.

According to some embodiments of the present disclosure, the battery cell 10 includes a shell 11a, which includes a bottom wall and a side wall surrounding the bottom wall. An end of the side wall is connected to the bottom wall, and another end forms an opening; and an end cover 11b is configured to cover the opening, wherein the first wall 111 is the end cover 11b or the bottom wall. The first wall 111 can be the bottom wall of the shell 11a of the battery cell 10, or it can be the end cover 11b of the battery cell 10.

With this design, the first wall 111 can be positioned at different locations of the battery cell 10, and different assembly methods can be selected according to the different positions of the electrode terminal 12, thus improving the adaptability of the first wall 111 to different battery cells 10.

According to some embodiments of the present disclosure, the present disclosure provides a battery 1000, including the battery cell 10 according to any of the above solutions.

According to some embodiments of the present disclosure, the present disclosure further provides an electric device, wherein the electric device includes the battery cell 10 according to any of the above solutions, and the battery cell 10 is configured to provide electrical energy; or, the electric device includes a battery 1000 according to any one of the above solutions, wherein the battery 1000 is configured to provide electrical energy.

According to some embodiments of the present disclosure, with reference to FIG. 5 to FIG. 9, The present disclosure provides a battery cell 10, wherein the battery cell 10 includes an end cover 11b, an electrode terminal 12, a sealing component 13, a connecting piece 14, and a first insulating member 15. The end cover 11b includes an inner surface 1112 and an outer surface 1111 that are arranged oppositely, and a first through-hole 1113 penetrating the inner surface 1112 and the outer surface 1111.

At least a portion of the electrode terminal 12 is threaded through the first through-hole 1113. At least a portion of the sealing component 13 is located within the first through-hole 1113 to seal the electrode terminal 12 and the end cover 11b. The connecting piece 14 is arranged on the outer surface 1111 and connected to the electrode terminal 12. At least a portion of the first insulating member 15 is arranged between the connecting piece 14 and the end cover 11b to separate the connecting piece 14 and the end cover 11b.

The first insulating member 15 includes a body portion 152 and a first extending portion 151, wherein the body portion 152 is located between the connecting piece 14 and the end cover 11b, the body portion 152 is provided with a second through-hole 155 for the electrode terminal 12 to pass through, and the first extending portion 151 is located on an outer periphery of the connecting piece 14 and surrounds an edge of the body portion 152. The first insulating member 15 further includes a second extending portion 153, wherein the second extending portion 153 protrudes from a surface of the body portion 152 facing the end cover 11b, the second extending portion 153 is arranged around the second through-hole 155, and at least a portion of the second extending portion 153 extends into the first through-hole 1113.

A flow-guiding groove 154 is arranged on a surface of the first insulating member 15. The flow-guiding groove 154 includes a first groove section 1511 and a second groove section 1521, wherein the first groove section 1511 is arranged on an outer peripheral surface of the first extending portion 151, the second groove section 1521 is arranged on a surface of the body portion 152 facing the end cover 11b, and the first groove section 1511 and the second groove section 1521 are in communication.

In the direction from the inner surface 1112 toward the outer surface 1111, one end of the first groove section 1511 extends beyond the outer surface 1111 and extends to the end of the first extending portion 151 that is away from the body portion 152.

The flow-guiding groove 154 further includes a third groove section 1531, wherein the third groove section 1531 is arranged on an outer peripheral surface of the second extending portion 153, and the second groove section 1521 communicates with the first groove section 1511 and the third groove section 1531.

The second extending portion 153 is provided with a first end surface 1532 facing the sealing component 13, and an end of the third groove section 1531 extends to the first end surface 1532. The sealing component 13 is provided with a second end surface 1311 facing the second extending portion 153, with the second end surface 1311 abutting the first end surface 1532. When observed in the direction from the inner surface 1112 toward the outer surface 1111, the second end surface 1311 does not overlap with the third groove section 1531.

When detecting the sealing performance of the battery cell 10, if the sealing component 13 fails, the interior of the battery cell 10 can be conducted to the exterior through the first groove section 1511, the second groove section 1521, and the third groove section 1531. This eliminates the interference of the false seal on the detection results, thereby improving the accuracy of the detection results of the sealing performance of the battery cell 10.

Finally, it should be noted that the above embodiments are only used to illustrate the technical solution of the present disclosure and are not intended to be a limitation thereof. Notwithstanding the detailed description of the present disclosure with reference to the foregoing embodiments, it should be understood by those of ordinary skill in the art that one may still modify the technical solution described in the preceding embodiments, or replace some or all of the technical features equally. These modifications or substitutions do not depart the essence of the corresponding technical solution from the scope of the technical solution of the embodiments of the present disclosure. All of them shall be covered by the scope of the claims and specification of the present disclosure. In particular, as long as there are no structural conflicts, the various technical features mentioned in each embodiment can be combined in any way. The present disclosure is not limited to the specific embodiments disclosed herein but includes all technical solutions falling within the scope of the claims.

## Claims

1. A battery cell, comprising
a housing, comprising a first wall, wherein the first wall comprises an inner surface and an outer surface that are arranged oppositely and a first through-hole penetrating the inner surface and the outer surface;
an electrode terminal, at least partially passing through the first through-hole;
a sealing component, configured to seal a gap between the electrode terminal and the first wall;
a connecting piece, arranged on an outer side of the first wall and connected to the electrode terminal;
a first insulating member, at least partially arranged between the connecting piece and the first wall to separate the connecting piece from the first wall; and
a flow-guiding channel, formed between the first insulating member and the first wall, wherein the flow-guiding channel is in communication with the first through-hole, so that an interior of the battery cell is in communication with an exterior when the sealing component fails.

2. The battery cell according to claim 1, wherein the flow-guiding channel is a flow-guiding groove arranged on a surface of the first insulating member.

3. The battery cell according to claim 2, wherein the first insulating member comprises a body portion and a first extending portion, the body portion is located between the connecting piece and the first wall, the body portion is provided with a second through-hole for the electrode terminal to pass through, and the first extending portion is located on an outer periphery of the connecting piece and surrounds an edge of the body portion.

4. The battery cell according to claim 3, wherein the flow-guiding groove comprises a first groove section and a second groove section, the first groove section is arranged on an outer peripheral surface of the first extending portion, the second groove section is arranged on a surface of the body portion facing the first wall, and the first groove section and the second groove section are in communication.

5. The battery cell according to claim 4, wherein the outer surface is provided with a recess, and at least a portion of the first insulating member is arranged within the recess.

6. The battery cell according to claim 4 or 5, wherein an end of the first groove section extends in a direction from the inner surface toward the outer surface and extends beyond the outer surface.

7. The battery cell according to any one of claims 4 to 6, wherein an end of the first groove section extends to an end of the first extending portion away from the body portion.

8. The battery cell according to any one of claims 4 to 7, wherein the first insulating member further comprises a second extending portion, the second extending portion protrudes from a surface of the body portion facing the first wall, the second extending portion is arranged around the second through-hole, and at least a portion of the second extending portion extends into the first through-hole.

9. The battery cell according to claim 8, wherein the flow-guiding groove further comprises a third groove section, the third groove section is arranged on an outer peripheral surface of the second extending portion and communicates with the first through-hole, and the second groove section communicates with the first groove section and the third groove section.

10. The battery cell according to claim 9, wherein the second extending portion is provided with a first end surface facing the sealing component, and an end of the third groove section extends to the first end surface.

11. The battery cell according to claim 10, wherein at least a portion of the sealing component is located inside the first through-hole and the sealing component is provided with a second end surface facing the second extending portion, with the second end surface abutting the first end surface; and
when observed in the direction from the inner surface toward the outer surface, the second end surface does not overlap with the third groove section.

12. The battery cell according to claim 11, wherein the electrode terminal comprises a terminal body and a protruding portion, the terminal body is arranged through the first through-hole, an end of the terminal body is connected to the connecting piece, another end of the terminal body is connected to the protruding portion, and the protruding portion protrudes from an outer peripheral surface of the terminal body.

13. The battery cell according to claim 12, wherein the sealing component comprises a first portion and a second portion, the first portion is located between an outer peripheral surface of the terminal body and a wall of the first through-hole, the second portion is located between the protruding portion and the first wall, and the second end surface is located at an end of the first portion away from the second portion.

14. The battery cell according to claim 2, wherein the sealing component is provided with a second end surface abutting the first insulating member; and
when observed in the direction from the inner surface toward the outer surface, the second end surface does not overlap with the flow-guiding groove.

15. The battery cell according to any one of claims 1 to 14, wherein the housing comprises:
a shell comprising a bottom wall and a side wall surrounding the bottom wall, wherein an end of the side wall is connected to the bottom wall, and another end forms an opening; and
an end cover, configured to cover the opening,
wherein the first wall is the end cover or the bottom wall.

16. A battery, comprising the battery cell according to any one of claims 1 to 15.

17. An electric device, wherein the electric device comprises the battery cell according to any one of claims 1 to 15, and the battery cell is configured to provide electrical energy; or, the electric device comprises the battery according to claim 16, wherein the battery is configured to provide electrical energy.
